# EUROPEAN PATENT APPLICATION

(11) **EP 2 066 077 A1**
(43) Date of publication of application: **03.06.2009**
(21) Application number: 07817072.7
(22) Date of filing: 12.10.2007
(51) Int. Cl.: H04L 12/28

(54) **SYSTEM, DEVICE AND METHOD FOR CONTROLLING THE CARRY CHANGE**

(30) Priority: 14.10.2006 CN 200610139152; 01.03.2007 CN 200710005608
(71) Applicant: Huawei Technologies Co., Ltd., Shenzhen, Guangdong Province 518129 (CN)
(72) Inventor: ZHONG, Jianfeng, Shenzhen Guangdong 518129 (CN); WANG, Geng, Shenzhen Guangdong 518129 (CN)
(74) Representative: Körber, Martin Hans
(86) International application number: PCT/CN2007/070881
(87) International publication number: WO 2008/046348

(57) **Abstract**

A system and a device for controlling bearer change are provided. The system includes a bearer change notifying entity and a bearer change control entity. The bearer change notifying entity is adapted to acquire information that a bearer needs to be changed, and send a bearer change notice to the bearer change control entity. The bearer change control entity is adapted to determine and control conversion from a multicast bearer mode to a unicast bearer mode or conversion from the unicast bearer mode to the multicast bearer mode according to the received bearer change notice. Further, a method for controlling bearer change is also provided. The system, the device, and the method are capable of sensing changes in multicast capability and user will and establishing the unicast/multicast bearer mode for data transmission.

## Description

### FIELD OF THE INVENTION

The present invention relates to mobile telecommunication technology, and more particularly to a system, a device, and a method for controlling bearer change.

### BACKGROUND

To effectively utilize the mobile network resources, the 3rd Generation Partnership Project (3GPP) puts forward the Multimedia Multicast Broadcast Service (MBMS), to realize the point- to-multipoint multicast service. The multicast service refers to the mode of transmitting datagram from one data source to multiple destinations, which, compared with the conventional point to point unicast mode, can save the bandwidth and realize the network resource sharing, including the resource sharing of the mobile core network and the access network, especially the air interface resource sharing. The MBMS defined by the 3GPP can realizes not only the plain text and low-rate message class multicast and broadcast, but also the high-rate multimedia service multicast and broadcast. The MBMS service is realized by adding some new network functional entities and adding MBMS functions in the existing network entities. For example, for the General Packet Radio Service (GPRS) network in the access network, the functional entities such as the broadcast multicast service center (BM-SC) are added; for the related existing network entities, such as the serving GPRS support node (SGSN), the gateway GPRS support node (GGSN), the radio network controller/base station controller (RNC/BSC) and the user equipment (UE) in the radio access network (RAN), the MBMS function support is added.

In order to save the network resource such as the bandwidth, the MBMS has been applied in the services in many systems currently. For example, to save the network resources such as the bandwidth in the IP multimedia subsystem (IMS), the 3GPP puts forward a solution of applying MBMS on the IMS service (IMSoMBMS). However, in the prior art, no regulations on how to perform the unicast/multicast bearer conversion have been made when the terminal or the network multicast capability or the user will is changed for the services applying the MBMS. When the multicast capability is lost, for example, the UE is migrated from an area supporting the multicast to the area not supporting the multicast, that is, migrated from the multicast coverage area to the non-multicast coverage area, as the non-multicast area cannot continue to establish the data transmission of the multicast bearer mode for the UE, the service, such as the session, will be terminated and cannot be performed any more. Or, the user senses that the communication quality of the multicast is deteriorated and is willing to convert the multicast to the unicast for communication, or the user is willing to convert the unicast bearer to the multicast bearer, or the system multicast bearer resource has abnormality, the system needs to convert the multicast bearer to the unicast bearer so as to ensure that the user service can be continued.

### SUMMARY

Accordingly, the present invention provides a system, a device, and a method for controlling bearer change, in order to meet the requirements for bearer conversion when a multicast capability of a terminal or a network changes or when a user will changes.

A system according to an embodiment of the present invention includes a bearer change notifying entity and a bearer change control entity, in which
the bearer change notifying entity is adapted to acquire information that a bearer needs to be changed, and send a bearer change notice to the bearer change control entity; and
the bearer change control entity is adapted to determine and control conversion of a bearer mode between unicast and multicast according to the received bearer change notice.

The bearer change notifying entity according to an embodiment of the present invention includes a bearer change acquiring module and a sending module, in which
the bearer change acquiring module is adapted to acquire the information that the bearer needs to be changed, and send a bearer change indication to the sending module; and
the sending module is adapted to send the bearer change notice to the bearer change control entity according to the received bearer change indication.

The bearer change control entity according to an embodiment of the present invention includes a receiving module and a unicast/multicast establishment control module, in which
the receiving module is adapted to receive the bearer change notice from the bearer change notifying entity and send the received bearer change notice to the unicast/multicast establishment control module; and
the unicast/multicast establishment control module is adapted to determine and control conversion of the bearer mode between the unicast and the multicast according to the bearer change notice from the receiving module.

A method for controlling bearer change according to an embodiment of the present invention is as follows:
A. A bearer change control entity receives a bearer change notice sent by a bearer change notifying entity when the bearer change notifying entity acquires information that a bearer needs to be changed; and
B. The bearer change control entity determines and controls conversion of a bearer mode between unicast and multicast according to the received bearer change notice.

It can be seen from the above solutions that, the bearer change notifying entity according to the embodiments of the present invention acquires the information that the bearer needs to be changed, such as changes in a multicast capability of a terminal and/or a multicast capability of a network and/or a user will, and sends the bearer change notice to the bearer change control entity; the bearer change control entity determines and controls the conversion from the multicast bearer mode to the unicast bearer mode, or the conversion from the unicast bearer mode to the multicast bearer mode according to the received bearer change notice so as to establish data transmission in the unicast or multicast bearer mode for a UE. Thus, a smooth conversion from the multicast bearer mode to the unicast bearer mode or a reverse conversion is realized, so that the bearer mode can be appropriately adjusted according to the changes in the multicast capability of the terminal or network or the user will so as to provide the continuous service capability, and at the same to meet the personal needs of a user.

### BRIEF DESCRIPTION OF THE DRAWINGS

The present invention will become better understood from the detailed description given herein below for illustration only, and thus are not limitative of the present invention, and wherein:

FIG. 1 is an exemplary flow chart of a method for controlling bearer change according to an embodiment of the present invention;

FIG. 2 is an exemplary structural view of a system for controlling bearer change according to an embodiment of the present invention;

FIG. 3 is a schematic structural view of a networking system of one specific application according to an embodiment of the present invention;

FIG. 4 is a flow chart of a method for controlling bearer change according to a first embodiment of the present invention;

FIG. 5 is a flow chart of a method for controlling bearer change according to a second embodiment of the present invention;

FIG. 6 is a flow chart of a method for controlling bearer change according to a third embodiment of the present invention;

FIG. 7 is a flow chart of a method for controlling bearer change according to a fourth embodiment of the present invention;

FIG. 8 is a flow chart of a method for controlling bearer change according to a fifth embodiment of the present invention;

FIG. 9 is a flow chart of a method for controlling bearer change according to s sixth embodiment of the present invention; and

FIG. 10 is a flow chart of a method for controlling bearer change according to a seventh embodiment of the present invention.

### DETAILED DESCRIPTION

In an embodiment of the present invention, a bearer change notifying entity acquires the information that the bearer needs to be changed, such as changes in terminal multicast capability and/or network multicast capability and/or user will, and sends a bearer change notice to a bearer change control entity; the bearer change control entity determines and controls the conversion from a multicast bearer mode to a unicast bearer mode or the conversion from the unicast bearer mode to the multicast bearer mode according to the received bearer change notice. The bearer change notice may be a multicast deactivating notice or a multicast activating notice.

When data transmission in the unicast bearer mode is established, the continuous service capability is provided, and at the same time, the personal needs of a user are satisfied.

For example, when acquiring that the multicast capability is lost, that is, the bearer mode needs to be converted from the multicast bearer to the unicast bearer, the bearer change notifying entity sends a multicast deactivating notice to the bearer change control entity; the bearer change control entity determines to convert from the multicast bearer mode to the unicast bearer mode according to the received multicast deactivating notice, and controls to establish the data transmission in the unicast bearer mode. Alternatively, when acquiring the multicast capability condition is allowed and needed, that is, the bearer mode needs to be converted from the unicast bearer to the multicast bearer, the bearer change notifying entity sends a multicast activating notice to the bearer change control entity; the bearer change control entity determines to convert from the unicast bearer mode to the multicast bearer mode according to the received multicast activating notice, and controls to establish the data transmission in the multicast bearer mode.

In actual implementation, the multicast deactivating notice may be a multicast deactivating message or a media re-negotiation request, or other internal notifying messages. Similarly, the multicast activating notice may be a multicast activating message or a media re-negotiation request, or other internal notifying messages.

The bearer change notifying entity may acquire the information that the bearer needs to be changed in many ways, for example, according to user will changes, reports from an access network, and the determination of the bearer change notifying entity itself.

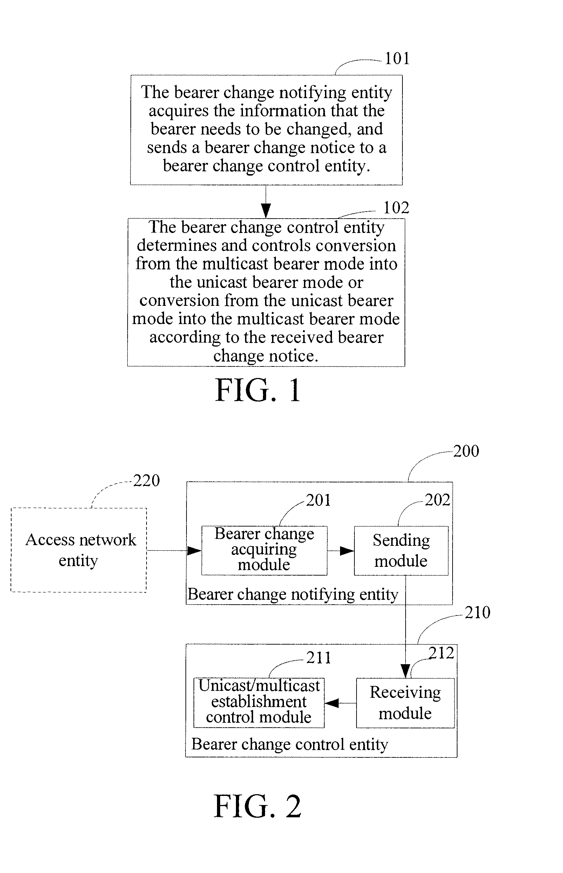

FIG. 1 is an exemplary flow chart of a method for performing bearer change according to an embodiment of the present invention. Referring to FIG. 1, the process is as follows:

In Step 101, the bearer change notifying entity acquires the information that the bearer needs to be changed, and sends a bearer change notice to a bearer change control entity.

In this embodiment, the information that the bearer needs to be changed includes: the information of changes in the terminal multicast capability and/or network multicast capability and/or user will. The changes in the terminal multicast capability and/or network multicast capability and/or user will acquired by the bearer change notifying entity may be as follows: The user may select the bearer mode according to the personal will through a user equipment (UE), the UE then sends the bearer change information to the bearer change notifying entity, and the bearer change notifying entity acquires the changes in the user will from the bearer change information, and thus acquires that the bearer needs to be changed. Alternatively, when the UE is moved from one area to another area, the bearer change control entity may acquire the information whether the new area supports the multicast capability from the network. For example, when the UE is moved from an area that supports multicast to an area that does not support multicast, the access network senses that the destination network does not support the multicast capability, and sends a multicast deactivating message to the bearer change notifying entity. The bearer change notifying entity acquires that the multicast capability is lost and the bearer needs to be changed according to the received multicast deactivating message. Alternatively, when the UE is moved from one network area to another network area, for example, from one cell to another cell, that is, when migration of the network area occurs, in order to ensure the continuity of the service, the unicast switching in the prior art is adopted to determine to convert the multicast bearer mode to the unicast bearer mode in advance. At this time, the bearer change notifying entity operates based on the situation that the multicast capability is lost by default, and the bearer needs to be changed. Alternatively, the terminal judges the quality conditions of the multicast bearer, and sends the bearer change information to the bearer change notifying entity accordingly, and the bearer change notifying entity acquires that the bearer needs to be changed according to the bearer change information. Alternatively, when the network multicast bearer resources are congested or abnormal, a network resource management device sends the bearer change information to the bearer change notifying entity, and the bearer change notifying entity acquires that the bearer needs to be changed according to the bearer change information.

The area may be an area covered by an SGSN or an area covered by an RAN unit (such as an RNC).

Taking the IMSoMBMS for example, the bearer change notifying entity may be a UE, and the bearer change control entity may be an application server (AS) or UE; alternatively, the bearer change notifying entity may also be a BM-SC, and the bearer change control entity may be an AS.

They are described respectively as follows:

Mode 1: The bearer change notifying entity is an UE, and the bearer change control entity is an AS or UE.

The method for the UE to acquire the information that the bearer needs to be changed may be as follows: The UE receives the bearer change operation from the user; or the UE receives the bearer change information from the network, for example, receives the capability information whether the network of the SGSN or the RAN supports the multicast; or the UE generates the bearer change operation. The UE acquires the bearer change through the above methods, and sends the bearer change notice to the bearer change control entity AS or UE.

Some examples of the conversion from the multicast bearer to the unicast bearer will be described as follows:

Example 1: When RAN migration occurs, in order to ensure the continuity of the service, the unicast switching in the prior art is adopted to determine to convert the multicast bearer mode to the unicast bearer mode in advance. Before the service RAN performs the switching, a multicast deactivating indication is sent to the UE. If the UE initiates a media re-negotiation message to the network side and controls to convert from the multicast bearer mode to the unicast bearer mode after the negotiation, the UE is not only the bearer change notifying entity, but also the bearer change control entity. If the UE sends the bearer change notice to the AS, the UE is the bearer change notifying entity, and the AS is the bearer change control entity. Alternatively, when SGSN migration occurs, if the destination access network does not support the multicast capability, a service SGSN sends the multicast deactivating message to a GGSN, and at the same time, also sends the multicast deactivating message to the UE through the RAN, and then the UE sends the bearer change notice to the AS according to the multicast deactivating message. As such, the UE is the bearer change notifying entity, and the AS is the bearer change control entity.

Example 2: The user finds that the signal transmission quality in the multicast is not good, and initiates the operation for switching to the unicast manually; alternatively, the UE judges, according to the network transmission quality, and determines to convert from the multicast to the unicast. At this time, if the UE initiates a media re-negotiation message to the network side, and controls to convert from the multicast bearer mode to the unicast bearer mode after the negotiation, the UE is not only the bearer change notifying entity, but also the bearer change control entity. If the UE sends the bearer change notice to the AS, the UE is the bearer change notifying entity, and the AS is the bearer change control entity.

The bearer change notice may be a multicast capability change message, for example, the UE sends the information whether the UE itself supports the multicast capability to the AS. The information indicating that the multicast capability is supported is used to request for the multicast bearer, and the information indicating that the multicast capability is not supported is used to request for the unicast bearer.

Mode 2: The bearer change notifying entity is a BM-SC, and the bearer change control entity is an AS.

The methods for the BM-SC to acquire the information that the bearer needs to be changed may be as follows: The BM-SC receives the activating or deactivating request operation of the multicast bearer from the terminal; or, the BM-SC receives the bearer change operation from the access network; or, the BM-SC generates the operation for bearer change. The BM-SC acquires the bearer change through these methods, and sends the bearer change notice to the bearer change control entity.

Some examples of the conversion from the multicast bearer to the unicast bearer will be described as follows:

Example a: The user finds that the signal transmission quality in the multicast is not good, and initiates the operation for switching to the unicast manually; alternatively, the UE judges according to the network transmission quality, determines to execute the conversion from the multicast to the unicast, and sends the multicast deactivating notice to the BM-SC, and then the BM-SC reports the multicast deactivating notice to the AS.

Example b: When SGSN migration occurs, the destination SGSN will indicate the multicast capability information of the destination access network to the service SGSN. If the multicast capability information of the destination access network indicates that the multicast capability is not supported, the service SGSN sends the multicast deactivating message to the GGSN, the GGSN sends the received multicast deactivating message to the BM-SC, and the BM-SC sends the multicast deactivating notice to the AS according to the multicast deactivating message. The multicast deactivating notice may be a multicast deactivating message, and may be transmitted through a Session Initiation Protocol (SIP) message.

Example c: The BM-SC initiatively generates the operation of bearer change, and sends the multicast deactivating notice to the AS.

In the above mentioned Mode 1 and Mode 2, the multicast deactivating notice is the bearer change notice. Further, the specific process for sending the multicast deactivating message to the UE through the RAN by the service SGSN is as follows: The service SGSN sends the multicast deactivating message to an RNC/BSC in the RAN, and the RNC/BSC sends the multicast deactivating message to the UE.

The multicast capability information of the destination access network may include the multicast capability information of the destination SGSN, the multicast capability information of the destination RAN, or the multicast capability information of the destination SGSN and the destination RAN.

The conversion from the unicast bearer mode to the multicast bearer mode is similar to the conversion from the multicast bearer mode to the unicast bearer mode.

In Step 102, the bearer change control entity determines and controls the conversion from the multicast bearer mode to the unicast bearer mode or the conversion from the unicast bearer mode to the multicast bearer mode according to the received notice.

In this step, after receiving the bearer change notice, the bearer change control entity may further detect a service, such as a session. If the service is in process, the bearer change control entity controls the conversion of the bearer.

When the bearer change control entity is the AS, the AS determines to convert from the multicast bearer mode to the unicast bearer mode according to the received bearer change notice, and controls to re-establish the transmission in the unicast bearer mode so as to maintain the service continuity; or the AS determines to convert from the unicast bearer mode to the multicast bearer mode, and controls to re-establish the transmission in the multicast bearer mode.

At this time, when the UE is the bearer change notifying entity, the user device initiates the media re-negotiation to the bearer change control entity, informs the bearer change control entity that the bearer changes, and requests to establish the unicast/multicast bearer.

When the bearer change control entity is a UE, the UE determines to convert from the multicast bearer mode to the unicast bearer mode or from the unicast bearer mode to the multicast bearer mode according to the received bearer change notice, initiates the media re-negotiation to the network side, and controls to convert the multicast bearer mode to the unicast bearer mode or convert the unicast bearer mode to the multicast bearer mode after the negotiation is completed.

FIG 2 is an exemplary structural view of a system for controlling bearer change according to an embodiment of the present invention. As shown in FIG. 2, the system includes a bearer change notifying entity 200 and a bearer change control entity 210.

The bearer change notifying entity 200 is adapted to acquire information that a bearer needs to be changed, and send a bearer change notice to the bearer change control entity 210.

The bearer change control entity 210 is adapted to receive the bearer change notice from the bearer change notifying entity, and determine and control conversion from a multicast bearer mode to a unicast bearer mode, or conversion from the unicast bearer mode to the multicast bearer mode according to the received bearer change notice.

In practical implementation, the bearer change notifying entity 200 has many specific implementation modes, as long as the functions described above can be realized. Next, a specific implementation mode is exemplified. As shown in FIG. 2, the bearer change notifying entity 200 may include a bearer change acquiring module 201 and a sending module 202.

The bearer change acquiring module 201 is adapted to acquire the information that the bearer needs to be changed, and send the bearer change indication to the sending module 202.

The sending module 202 is adapted to receive the bearer change indication from the bearer change acquiring module 201, and send the bearer change notice to the bearer change control entity 210 according to the received bearer change indication.

The bearer change acquiring module 201 and the sending module 202 may be integrated together to acquire the information that the bearer needs to be changed, and send the bearer change notice to the bearer change control entity 210.

In practical implementation, the bearer change control entity 210 may have many specific implementation modes, as long as the functions described above can be realized. Next, only one specific implementation mode is exemplified. As shown in FIG 2, the bearer change control entity 210 may include a receiving module 211 and a unicast/multicast establishment control module 212.

The receiving module 211 is adapted to receive the bearer change notice from the bearer change notifying entity, and send the received bearer change notice to the unicast/multicast establishment control module 212.

The unicast/multicast establishment control module 212 is adapted to determine and control the conversion from the multicast bearer mode to the unicast bearer mode, or the conversion from the unicast bearer mode to the multicast bearer mode according to the bearer change notice from the receiving module 211.

The receiving module 211 and the unicast/multicast establishment control module 212 may be integrated together to receive the bearer change notice from the bearer change notifying entity, and determine and control the conversion from the multicast bearer mode to the unicast bearer mode, or the conversion from the unicast bearer mode to the multicast bearer mode according to the received notice.

Further, in practical implementation, the unicast/multicast establishment control module 212 may specifically include a unicast/multicast bearer mode establishment module and a data transmission conversion module.

The unicast/multicast bearer mode establishment module is adapted to determine the conversion from the multicast bearer mode to the unicast bearer mode according to the bearer change notice from the receiving module and initiate a process for establishing the unicast bearer mode, or to determine the conversion from the unicast bearer mode to the multicast bearer mode and, when the establishment is completed, send a notification message indicating that the unicast has been established or a notification message indicating that the multicast has been established to the data transmission conversion module.

The data transmission conversion module is adapted to convert the data transmission from the multicast channel to the unicast channel according to the received notification message indicating that the unicast has been established or the received notification message indicating that the multicast has been established.

Many specific implementations of the bearer change notifying entity 200 and the bearer change control entity 210 can be made by those of ordinary skill in the art according to the technical solutions in embodiments of the present invention without creative labor, such as the division or combination of the above mentioned modules, which will not be described in detail here.

In addition, as shown in FIG. 2, the system may further include an access network entity 220.

The access network entity 220 is adapted to send the bearer change information to the bearer change notifying entity 200 when it is determined that the bearer needs to be changed. The bearer change notifying entity 200 receives the bearer change information from the access network entity 220, and executes the operation of acquiring the information that the bearer needs to be changed and sending the multicast deactivating notice to the sending module. In practical implementation, such operation can be performed by the bearer change acquiring module 201 in the bearer change notifying entity 200.

If the bearer change notifying entity 200 is a BM-SC, the access network entity 220 may include a destination SGSN, a service SGSN, and a GGSN.

The destination SGSN is adapted to send the multicast capability information of the destination access network to the service SGSN.

The service SGSN is adapted to receive the multicast capability information of the destination SGSN, and send a bearer change message to the GGSN when it is determined that the bearer needs to be changed according to the received multicast capability information.

The GGSN is adapted to receive the bearer change message from the service SGSN, and send the bearer change notice to the BM-SC according to the received bearer change message.

If the bearer change notifying entity 200 is a UE, the access network entity 220 may include a destination SGSN and a service SGSN.

The destination SGSN is adapted to send the multicast capability information of the destination access network to the service SGSN.

The service SGSN is adapted to receive the multicast capability information of the destination SGSN, and send the bearer change message to the UE through the RAN when it is determined that the bearer needs to be changed according to the received multicast capability information.

Alternatively, if the bearer change notifying entity 200 is a UE, the access network entity 220 is an RAN.

The RAN is adapted to determine to convert the multicast bearer mode to unicast bearer mode in advance when the network area migration occurs, and send a bearer change message to the UE in the multicast bearer mode.

The process for the service SGSN to send the bearer change message to the UE through the RAN may be as follows: Firstly, the service SGSN sends the bearer change message to the RNC/BSC in the RAN, and then the RNC/BSC sends the bearer change message to the UE.

When the bearer change notifying entity 200 is a BM-SC or a UE, the bearer change control entity 210 may be an AS. When the bearer change notifying entity 200 is a UE, the bearer change control entity 210 may also be a UE.

The specific implementation processes of the functional entities and modules are similar to those described in the flow shown in FIG. 1.

An SIP interface may be used between the bearer change notifying entity 200 and the bearer change control entity 210.

The embodiments of the method, the system, and the device entities in the system are described in detail with reference to the specific applications. For example, the access network is a GPRS network, and the IMSoMBMS is described.

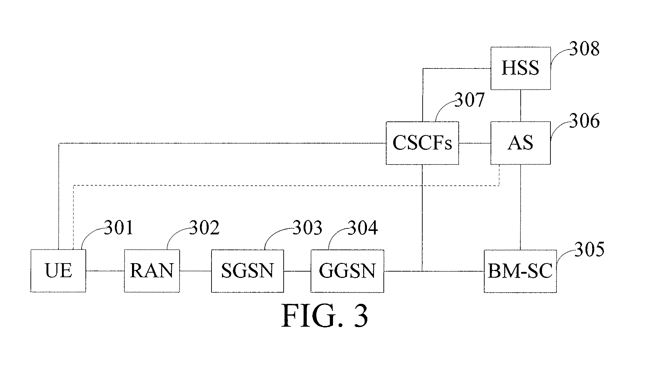

FIG. 3 is a schematic structural view of a networking system of a specific application according to an embodiment of the present invention. As shown in FIG. 3, the networking system includes: a UE 301, a RAN 302, an SGSN 303, a GGSN 304, a BM-SC 305, an AS 306, call session control functions (CSCFs) 307, and a home subscriber server (HSS) 308.

The UE 301 supports the activation and deactivation of the MBMS multicast service.

The AS 306 is adapted to control the IMS service that uses the MBMS multicast and receive the multicast capability information from the UE, determine to adopt the unicast bearer mode or the multicast bearer mode for the UE 301 according to the received multicast capability information, and control the network to establish the corresponding bearer mode to perform data transmission.

The BM-SC 305 is the entrance of a content provider, and is adapted to authorize and initiate the MBMS multicast bearer service, and transmit the MBMS content according to the predetermined time schedule. The functions of the BM-SC 305 include: (1) authentication, authorization, and accounting for the third party content provider; (2) providing MBMS transmission related parameters, such as QoS and multicast broadcast areas; and initiating and terminating the MBMS transmission resources; (3) receiving and transmitting the MBMS content from an external data source, arranging and transmitting the MBMS session and notifying the user, and session re-transmission; and (4) service declaration, including media description, and session description such as multicast service identifiers, addresses, and transmission time.

The RAN 302 includes a Universal Terrestrial Radio Access Network (UTRAN) and a Global System for Mobile Communications (GSM)/enhanced GSM (EDGE) access network (GERAN), and so on, which is adapted to transmit the MBMS data in the predetermined multicast or broadcast service area through the RNC/BSC. The RAN 302 supports the core network to initiate and terminate the MBMS transmission, and supports the movement of an MBMS receiver between the RNC/BSC.

The SGSN 303 controls the network on the user, and supports the movement of the MBMS receiver between SGSNs; further, the SGSN 303 establishes or releases the bearer connection with the RAN and the GGSN according to the notice sent by the GGSN.

As the IP multicast service node of the MBMS data, the GGSN 304 requests to establish or release the user plane bearer for the multicast service transmission according the notice of the BM-SC, and receives the IP multicast content from the BM-SC or other data sources and performs routing.

The CSCFs307 and the HSS 308 are adapted to complete the session establishment and authentication. The CSCFs include a proxy CSCF (P-CSCF), an inquiry CSCF (I-CSCF), and a service CSCF (S-CSCF).

In specific implementation of the above mentioned functional entities, the BM-SC 305 and the UE 301 may also serve as the bearer change notifying entity 200, and the AS 306 may serve as the bearer change control entity 210. At this time, the BM-SC 305 or the UE 301 is further adapted to acquire the information that the bearer is to be changed, and send the bearer change notice to the AS 306. The AS 306 is further adapted to receive the bearer change notice from the BM-SC 305 or the UE 301, determine to convert the multicast bearer mode to the unicast bearer mode according to the received bearer change notice, and control to establish the data transmission in the unicast bearer mode. Alternatively, The AS 306 is adapted to determine to convert the unicast bearer mode to the multicast bearer mode, and control to establish the data transmission in the multicast bearer mode. The BM-SC 305 or the UE 301 may include the bearer change acquiring module 201 and the sending module 202 shown in FIG. 2, and has the same function as that described in FIG. 2. The AS 306 may include the receiving module 211 and the unicast/multicast establishment control module 212 shown in FIG 2, and has the same function as that described in FIG. 2. When the UE performs the network area switching, the destination SGSN 303 sends the multicast capability information of the destination access network to the service SGSN 303; and the service SGSN303 receives the multicast capability information of the destination access network, and sends the bearer change message to the GGSN 304 when it is determined that the bearer needs to be changed according to the received multicast capability, and then the GGSN 304 sends the bearer change message to the BM-SC 305. Alternatively, the service SGSN 303 sends the bearer change message to the UE 301 through the RAN 302. Or, when the network area migration occurs, the RAN determines to convert the multicast bearer mode to unicast bearer mode in advance, and sends the bearer change message to the UE301 in the multicast bearer mode.

The multicast capability information of the destination access network includes the multicast capability information of the destination SGSN 303, the multicast capability information of the destination RAN 302, or the multicast capability information of the destination SGSN 303 and the destination RAN 302.

In practical implementation of the functional entities in the system shown in FIG. 2, the UE 301 may also serve as the bearer change control entity 210. The RAN 302 sends the bearer change notice to the UE 301 through the RNC/BSC when it is determined that the bearer needs to be changed. The UE 301 is further adapted to receive the bearer change notice from the RAN 302, determine to convert the multicast bearer mode to the unicast bearer mode according to the received bearer change notice, and control to establish the data transmission in the unicast bearer mode, or determine to convert the unicast bearer mode to the multicast bearer mode, and control to establish the data transmission in the multicast bearer mode. The UE 301 may include the bearer change acquiring module 201 and the unicast/multicast establishment control module 212 shown in FIG. 2. That is, as the UE 301 is the bearer change notifying entity and the bearer change control entity, the bearer change notifying entity and the bearer change control entity shown in FIG 2 are integrated together. At this time, the bearer change acquiring module 201 and the sending module 202 are integrated together, and the receiving module 211 and the unicast/multicast establishment control module 212 are integrated together. The functions of the modules may be the same as those described in FIG. 2.

Then, several embodiments of the method for controlling bearer change of the networking system in FIG. 3 are described.

First, taking the conversion from the multicast bearer mode to the unicast bearer mode for example, the method and the system for controlling bearer change are described in detail. The bearer change notice may be a multicast deactivating message or a multicast deactivating notice.

Embodiment 1: corresponding to the condition of Example b in Step 101 in FIG 1, and the condition that SGSN migration occurs in Example 1.

In this embodiment, the UE has the multicast capability, and the service access network for initially establishing a session has the multicast capability, and the multicast bearer mode has been established. When the network area movement of the UE occurs during the session, the destination access network does not has the multicast capability, that is, the UE is moved from an area supporting the multicast to an area not supporting the multicast. The service RAN of the service access network is labeled as RAN0, the service SGSN is labeled as SGSN0, the destination RAN in the destination access network is labeled as RANI, and the destination SGSN is labeled as SGSN1.

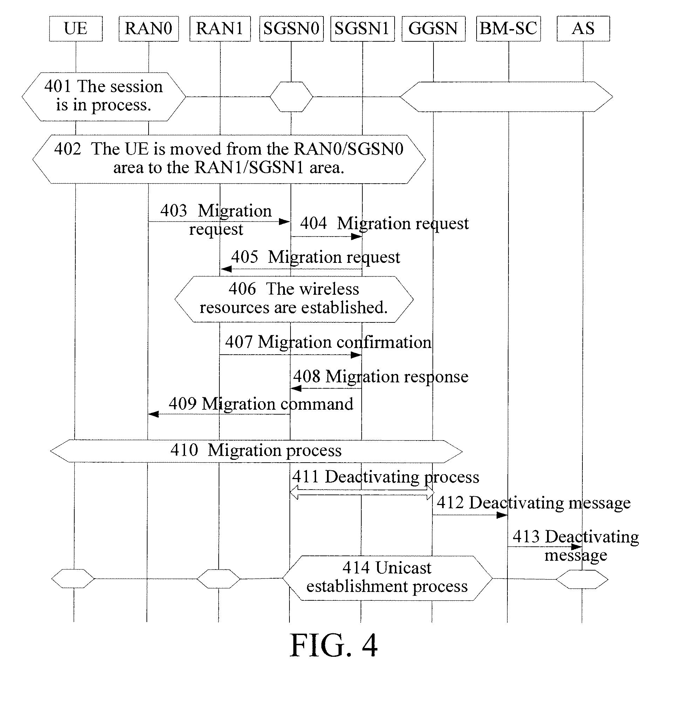

FIG 4 is a flow chart of the method for controlling bearer change according to the first embodiment. As shown in FIG. 4, some steps in the process are the existing steps in the prior art. In consideration of conciseness and for better illustrating the flow of the present invention, some procedures in FIG 4 that are the same as those in the prior art will not be described in detail. Information interaction is expressed by hexagons covered thereon, and the entities covered by hexagons indicate that the entities take part in the interaction process. The hexagons in the flow charts of other methods described herein have the same meaning.
Referring to FIG. 4, the flow is as follows:

In Step 401, the multicast bearer mode session is in process.

In Step 402, the network area migration occurs, and the UE is moved from the RAN0 and SGSN0 area to the RAN1 and SGSN1 area, that is, the UE is moved from the service access network to the destination access network.

In Steps 403-405, the RAN0 sends a migration request to the SGSN0, the SGSN0 sends a migration request to the SGSN1 according to the received migration request, and then the SGSN1 sends a migration request to the RAN1 according to the received migration request.

In Steps 406-407, the RAN1 establishes the radio resources according to the received migration request, and returns a migration confirmation message to the SGSN1 to confirm that the radio resource has been established.

In Step 408, the SGSN1 sends a migration response message to the SGSN0 after receiving the migration confirmation message from the RAN1.

In this step, the migration response message sent by the SGSN1 to the SGSN0 carries the multicast capability information of the destination access network, and the multicast capability information may include: the multicast capability information of the SGSN1, the multicast capability information of the RAN1, or the multicast capability information of the SGSN1 and the RAN1.

In this embodiment, the multicast capability information of the destination access network is that the multicast is not supported, that is, the destination access network does not have the multicast capability.

In Steps 409-410, the SGSN0 sends a migration command to the RAN1 after receiving the migration response message from the SGSN1, and the RAN1 controls to complete the migration process.

In Step 411, the SGSN0 acquires that the destination access network does not have the multicast capability from the migration response message of Step 408, and initiates a multicast deactivating process, and sends the multicast deactivating message to the GGSN.

In Step 412, after receiving the multicast deactivating message, the GGSN sends a multicast deactivating message, i.e., a multicast deactivating notice, to the BM-SC.

In Step 413, the BM-SC sends a multicast deactivating message to the AS according to the received multicast deactivating notice.

In this step, after terminating the MBMS multicast transmission resource, the BM-SC sends the multicast deactivating notice to the AS according to the received multicast deactivating message. In practical implementation, the multicast deactivating message may be sent to the AS, and the message may be an SIP message carrying the multicast deactivating indication.

In Step 414, the AS controls the network to establish the unicast bearer mode for data transmission.

In this step, AS may further judge whether the current session still exists, that is, whether the notification message for terminating the session is received. If the session still exists, that is, the notification message for terminating the session has not been received, it is determined to convert from the multicast bearer mode to the unicast bearer mode, and the network is controlled to establish the unicast bearer mode for data transmission so as to maintain the continuity of the service such as the session.

In specific implementation, according to the received multicast deactivating message, it is determined to convert the multicast bearer mode to the unicast bearer mode, and the process for establishing the unicast bearer mode is initiated; after the unicast bearer mode is established, the data transmission is converted from the multicast channel to the unicast channel.

In the flow of the method in FIG. 4, Steps 411-414 and Steps 409-410 may be performed simultaneously. Moreover, Step 411 further includes: When sending the multicast deactivating message to the GGSN, the SGSN0 may send the multicast deactivating message to the UE through the RAN0. In Step 413, the UE sends the bearer change notice to the AS according to the received multicast deactivating message. In specific implementation, the bearer change notice may be sent to the AS through the SIP message, and the bearer change notice may be a multicast capability change notification message. At this time, the BM-SC still operates in the same way as that in the prior art, that is, terminates the multicast transmission resources without sending the multicast deactivating notice to the AS.

In this embodiment, the functions controlled by the RAN0 and the RAN1 are realized by the RNC/BSC in the RANs.

Embodiment 2: corresponding to the condition that the UE is the bearer change notifying entity and the bearer change control entity when RAN migration occurs in Example 1 in Step 101 in FIG. 1.

In this embodiment, the application scenario is still the same as that in the first embodiment. That is, the UE has the multicast capability, the service access network initially establishing the session has the multicast capability, and the multicast bearer mode has been established. When the network area movement of the UE occurs during the session, the destination access network does not have the multicast capability, that is, the UE is moved from an area supporting the multicast to an area not supporting the multicast.

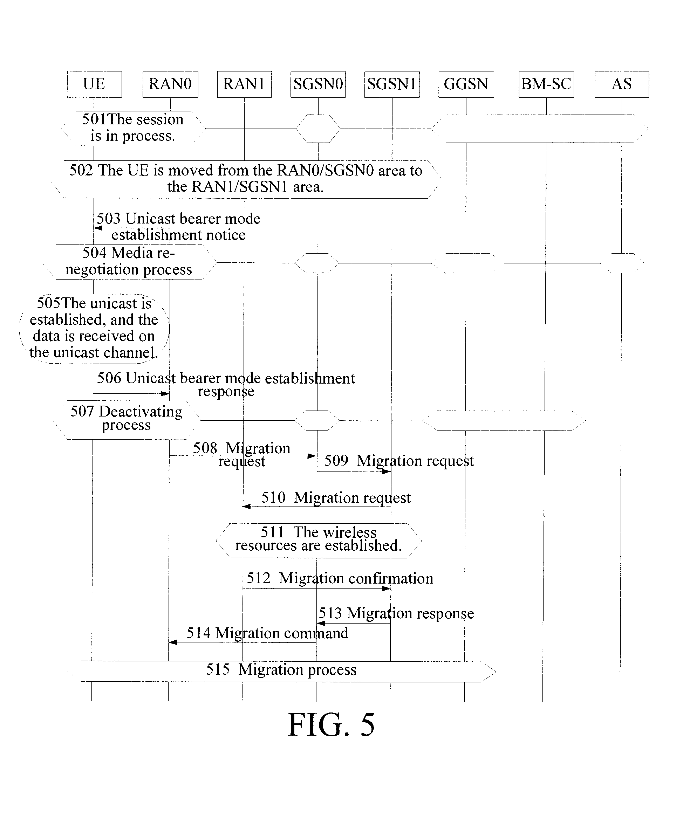

FIG. 5 is a flow chart of the method for controlling bearer change according to the second embodiment of the present invention. Referring to FIG. 5, the flow is as follows:

Steps 501-502 are the same as Steps 401-402 in FIG. 4, that is, during the session in the multicast bearer mode, the network area migration occurs, and the UE is moved from the RAN0 and SGSN0 areas to the RAN1 and SGSN1 area, that is, the UE is moved from the service access network to the destination access network.

In Step 503, the RAN0 sends a multicast deactivating notice to the UE.

In this step, the RAN0 acquires that the UE will have the network migration. In order to ensure the continuity of service and realize the smooth switching from the unicast to the unicast in the prior art, the operation of Step 403 in the flow in FIG. 4 will not be executed temporarily, that is, the migration request will not be sent to the SGSN0 temporarily, but the multicast deactivating notice is sent to the UE, for example, through an SIP message.

In Steps 504-505, the UE receives the multicast deactivating notice from the RAN0, determines to convert the multicast bearer mode to the unicast bearer mode, initiates the media re-negotiation process to convert the multicast bearer mode to the unicast bearer mode; and after establishing the unicast, receives the data on the unicast channel.

In addition, the process for initiating the establishment of the unicast bearer mode is to initiate a media re-negotiation process, and when the establishment of the unicast bearer mode is completed, the data transmission is converted from the multicast channel to the unicast channel, that is, to receive data on the unicast channel.

In Step 506, after the establishment of the unicast is completed, a unicast bearer mode establishment response is sent to the RAN0.

Steps 507-515 are the same as Steps 403-410 in the flow in FIG 4, and the migration process is completed.

In this embodiment, the functions controlled by the RAN0 and the RAN1 are realized by the RNC/BSC in the RANs.

Embodiment 3: corresponding to the condition that the UE is the bearer change notifying entity and the AS is the bearer change control entity in Example 2 in Step 101 in FIG. 1.

In this embodiment, the UE has the multicast capability, the service access network initially establishing the session has the multicast capability, and the multicast bearer mode has been established. During the session, it is judged according to the user will or the network transmission quality to determine to execute the conversion from the multicast to the unicast.

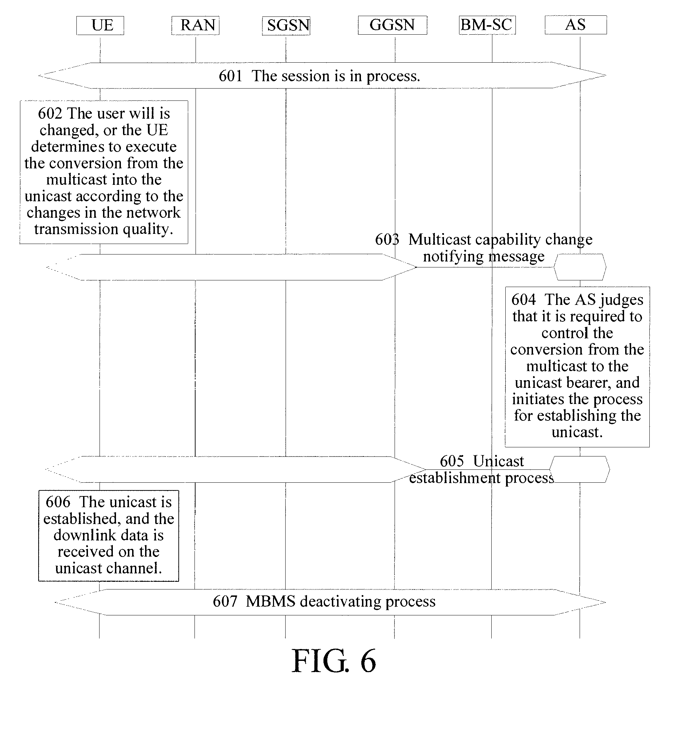

FIG. 6 is a flow chart of the method for controlling bearer change according to the third embodiment of the present invention. Referring to FIG 6, the flow is as follows:

In Step 601, the session is in process.

In Step 602, the user finds that the signal transmission quality in the multicast is not good, and initiates the operation for switching to the unicast manually. Alternatively, the UE judges according to the network transmission quality, and determines to execute the conversion from the multicast to the unicast.

In Step 603, the UE sends the bearer change notice to the AS.

In this step, the bearer change notice may be a multicast capability change notification message. In the specific implementation, the multicast capability change notification message may be sent to the AS through an SIP message. The multicast capability change notification message carries the information whether the UE supports the multicast capability. The information indicating that the multicast capability is supported is adapted to request to use the multicast bearer, and the information indicating that the multicast capability is not supported is adapted to request to use the unicast bearer.

In this embodiment, the multicast capability change notification message carries the information indicating that the UE does not support the multicast capability currently.

In Step 604, after receiving the bearer change notice, the AS judges that it is required to control the conversion from the multicast to the unicast bearer.

In Step 605, the AS initiates the flow for establishing the unicast.

In Step 606, after the unicast is established successfully, the UE receives the downlink data on the unicast channel.

In Step 607, the UE initiates the MBMS deactivating flow to release the multicast resource.

Embodiment 4: corresponding to the condition that the UE is not only the bearer change notifying entity but also the bearer change control entity in Example 2 in Step 101 in FIG. 1.

In this embodiment, the application scenario is still the same as that in the first embodiment. That is, the UE has the multicast capability, the service access network initially establishing the session has the multicast capability, and the multicast bearer mode has been established. During the session, it is judged according to the user will or the network transmission quality to determine to execute the conversion from the multicast to the unicast.

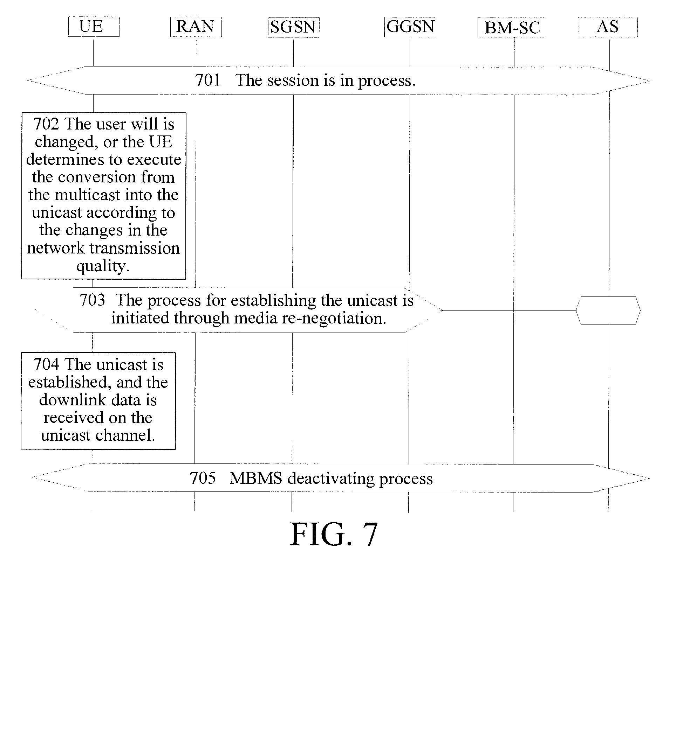

FIG. 7 is a flow chart of the method for controlling bearer change according to the fourth embodiment of the present invention. Referring to FIG. 7, the flow is as follows:

In Step 701, the session is in process.

In Step 702, the user finds that the signal transmission quality in the multicast is not good, and initiates the operation for switching to the unicast manually. Alternatively, the UE judges, according to the network transmission quality, to determine to execute the conversion from the multicast to the unicast.

In Step 703, the UE initiates the flow for establishing the unicast by initiating the media re-negotiation.

In Step 704, after the unicast is established successfully, the UE receives the downlink data on the unicast channel.

In Step 705, the UE initiates the MBMS deactivating flow to release the multicast resource.

Embodiment 5: corresponding to Example a in Step101 in FIG. 1.

In this embodiment, the UE has the multicast capability, the service access network initially establishing the session has the multicast capability, and the multicast bearer mode has been established. During the session, it is judged according to the user will or the network transmission quality to determine to execute the conversion from the multicast to the unicast.

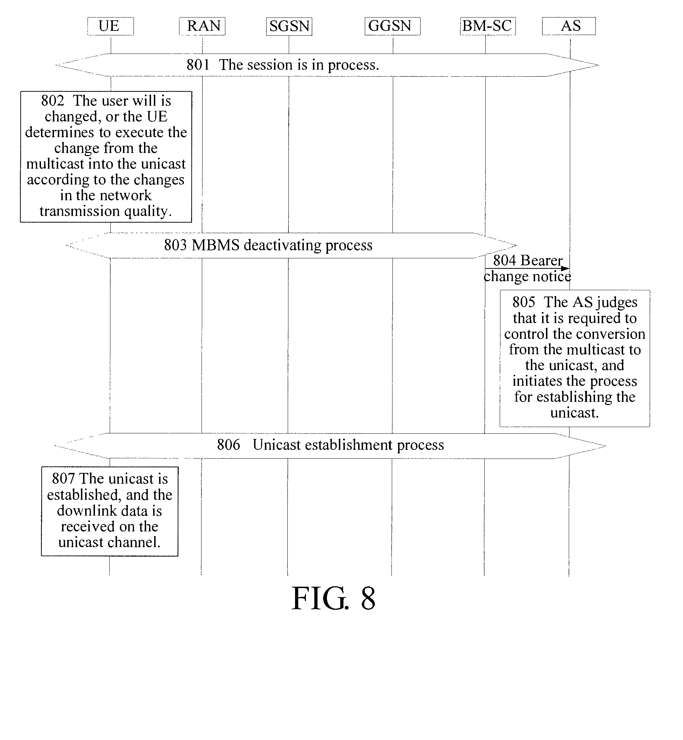

FIG. 8 is a flow chart of the method for controlling bearer change according to the fifth embodiment of the present invention. The flow is as follows:

In Step 801, the session is in process.

In Step 802, the user finds that the signal transmission quality in the multicast is not good, and initiates the operation for switching to the unicast manually. Alternatively, the UE judges, according to the network transmission quality, to determine to execute the conversion from the multicast to the unicast.

In Step 803, the UE initiates the MBMS deactivating flow.

In this step, the MBMS deactivating flow initiated by the UE is an existing flow, and may be processed according to the conventional art.

In Step 804, after receiving the deactivating message, the BM-SC reports the bearer change notice to the AS.

In this step, after receiving the activating message according to the MBMS deactivating flow in the conventional art, the BM-SC sends the bearer change notice to the AS.

In Step 805, after receiving the bearer change notice, the AS finds that the user does not send a clearing request, and judges that it is required to control the conversion from the multicast to the unicast bearer.

In Step 806, the AS initiates the flow for establishing the unicast according to the existing calling flow.

In Step 807, after the unicast is established successfully, the UE receives the downlink data on the unicast channel.

Embodiment 6: corresponding to Example c in Step 101 in FIG. 1.

In this embodiment, the UE has the multicast capability, and the service access network initially establishing the session has the multicast capability, and the multicast bearer mode has been established. During the session, the BM-SC has internal abnormality and initiates the bearer change notice.

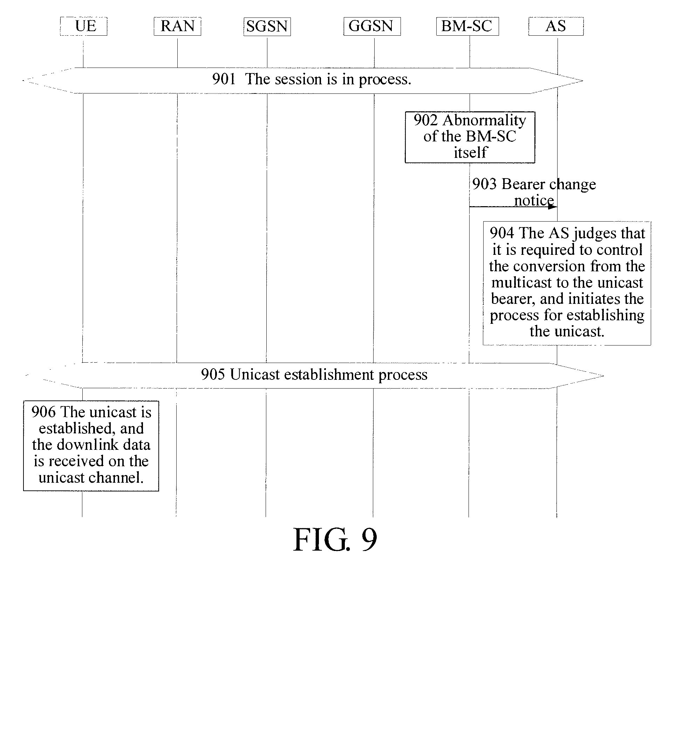

FIG. 9 is a flow chart of the method for controlling bearer change according to the sixth embodiment of the present invention. Referring to FIG. 9, the flow is as follows:

In Step 901, the multicast session is in process.

In Step 902, the BM-SC has internal abnormality and initiates the bearer change notice.

In Step 903, the BM-SC sends the bearer change notice message to the AS.

In Step 904, after receiving the bearer change notice, the AS finds that the user does not send out a clearing request, and judges that it is required to control the conversion from the multicast to the unicast bearer.

In Step 905, the AS initiates the flow for establishing the unicast according to the existing calling process.

In Step 906, after the unicast is established successfully, the UE receives the downlink data on the unicast channel.

The conversion from the multicast bearer mode to the unicast bearer mode is taken for example above to illustrate the method and the system for controlling bearer change. The conversion from the unicast bearer mode to the multicast bearer mode is similar to the former, and will not be described in detail here. Then, only one specific embodiment will be described in the following to illustrate the conversion from the unicast bearer mode to the multicast bearer mode. The bearer change notice may be a multicast activating message or a multicast activating notice.

### Embodiment 7

In this embodiment, the UE has the multicast capability, and the unicast bearer mode is established when the session is established. During the session, it is judged according to the user will or the network transmission quality to determine to execute the conversion from the unicast to the multicast. In this embodiment, the UE is not only the bearer change notifying entity but also the bearer change control entity.

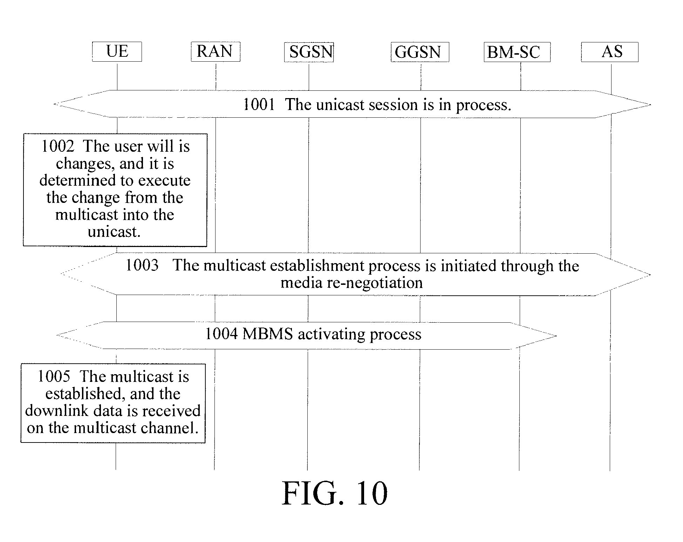

FIG. 10 is a flow chart of the method for controlling bearer change according to the seventh embodiment of the present invention. As shown in FIG. 10, the flow is as follows:

In Step 1001, the unicast session is in process.

In Step 1002, the user initiates the operation for switching to the multicast manually.

In Step 1003, the UE initiates the flow for establishing the multicast by initiating the media re-negotiation.

In Step 1004, the UE initiates the MBMS activating flow to establish the multicast bearer.

In Step 1005, the multicast resource is established successfully, and the UE receives the downlink data on the multicast channel.

The above mentioned embodiments are all described by taking the GPRS network as an example of the access network. In practical applications, the access network may also be other networks, such as a wireless local area network (WLAN). Further, the services applying the MBMS may also be not limited to the IMS, and the corresponding multicast capability loss report entity and the service continuity control entity may both be changed. Those of ordinary skill in the art can carry out equivalent implementations in other systems according to the spirit of the embodiments of the present invention. Therefore, it should be understood that, the above description is merely specific embodiments of the present invention, but is not intended to limit the scope of the present invention. Any modifications, equivalents, and improvements made within the spirit and principle of the present invention shall fall in the scope of the present invention.

## Claims

1. A system for controlling bearer change, wherein the system at least comprises:
a bearer change notifying entity adapted to acquire information that a bearer needs to be changed, and send a bearer change notice to a bearer change control entity; and
the bearer change control entity adapted to determine and control conversion of a bearer mode between unicast and multicast according to the received bearer change notice.

2. The system according to claim 1, wherein the bearer change notifying entity comprises:
a bearer change acquiring module is adapted to acquire the information that the bearer needs to be changed, and send a bearer change indication to a sending module; and
the sending module is adapted to send the bearer change notice to the bearer change control entity according to the received bearer change indication.

3. The system according to claim 1, wherein the bearer change control entity comprises:
a receiving module adapted to receive the bearer change notice from the bearer change notifying entity and send the received bearer change notice to a unicast/multicast establishment control module; and
the unicast/multicast establishment control module adapted to determine and control conversion of the bearer mode between the unicast and the multicast according to the bearer change notice from the receiving module.

4. The system according to claim 1, wherein the bearer change notifying entity is a user equipment (UE).

5. The system according to claim 1, further comprising:
an access network entity, adapted to send bearer change information to the bearer change notifying entity when determining that the bearer needs to be changed.

6. The system according to claim 5, wherein the bearer change notifying entity is a UE; and
the access network entity comprises:
a destination serving general packet radio service (GPRS) support node (SGSN) adapted to send multicast capability information of a destination access network to a service SGSN; and
the service SGSN adapted to receive the multicast capability information of the destination SGSN, and send the bearer change notice to the UE through a radio access network (RAN) when determining that the bearer needs to be changed according to the received multicast capability information.

7. The system according to claim 5, wherein the bearer change notifying entity is a broadcast multicast service center (BM-SC); and
the access network entity comprises:
a destination SGSN adapted to send multicast capability information of a destination access network to a service SGSN;
the service SGSN adapted to receive the multicast capability information of the destination SGSN, and send a bearer change message to a gateway GPRS support node (GGSN) when determining that the bearer needs to be changed according to the received multicast capability information; and
the GGSN adapted to receive the bearer change message from the service SGSN and send the bearer change notice to the BM-SC acc ording to the received bearer change message.

8. The system according to claim 1, wherein the bearer change notifying entity is a BM-SC.

9. The system according to any one of claims 1 to 8, wherein the bearer change control entity is an application server.

10. The system according to any one of claims 1 to 6, wherein the bearer change control entity is a UE.

11. A bearer change notifying entity, comprising: a bearer change acquiring module and a sending module, wherein
the bearer change acquiring module is adapted to acquire information that a bearer needs to be changed, and send a bearer change indication to the sending module; and
the sending module is adapted to send a bearer change notice to a bearer change control entity according to the received bearer change indication.

12. The bearer change notifying entity according to claim 11, wherein the bearer change acquiring module and the sending module are integrated together.

13. The bearer change notifying entity according to claim 11 or 12, comprising: a user equipment (UE) and/or a broadcast multicast service center (BM-SC).

14. A bearer change control entity, comprising: a receiving module and a unicast/multicast establishment control module, wherein
the receiving module is adapted to receive a bearer change notice from a bearer change notifying entity, and send the received bearer change notice to the unicast/multicast establishment control module; and
the unicast/multicast establishment control module is adapted to determine and control conversion of a bearer mode between unicast and multicast according to the bearer change notice from the receiving module.

15. A method for controlling bearer change, comprising:
A. receiving, by a bearer change control entity, a bearer change notice sent by a bearer change notifying entity when the bearer change notifying entity acquires information that a bearer needs to be changed;
B. determining and controlling, by the bearer change control entity, conversion of a bearer mode between unicast and multicast according to the received bearer change notice.

16. The method according to claim 15, wherein the bearer change notifying entity is a user equipment (UE); and
the bearer change notice sent by the bearer change notifying entity when the bearer change notifying entity acquires the information that the bearer needs to be changed comprises: the bearer change notice sent by the UE when the UE acquires that the bearer needs to be changed through receiving a bearer change operation from a user, or receiving bearer change information from a network, or generating a bearer change operation by the UE itself.

17. The method according to claim 16, wherein the bearer change information received by the UE from the network is capability information whether one or both of a serving general packet radio service (GPRS) support node (SGSN) and a radio access network (RAN) supports the multicast received by the UE.

18. The method according to any one of claims 15 to 17, wherein the bearer change control entity is a UE;
the step B comprises: determining, by the UE, to convert from the multicast bearer mode to the unicast bearer mode or to convert from the unicast bearer mode to the multicast bearer mode according to the received bearer change notice, initiating a media re-negotiation to a network side, and after the negotiation is completed, controlling to convert the multicast bearer mode to the unicast bearer mode or controlling to convert the unicast bearer mode to the multicast bearer mode.

19. The method according to claim 16, wherein the bearer change notice comprises information whether the UE supports multicast capability for requesting whether to use the multicast bearer.

20. The method according to claim 15, wherein the bearer change notice sent by the bearer change notifying entity when the bearer change notifying entity acquires the information that the bearer needs to be changed comprises:
the bearer change notice sent by the broadcast multicast service center (BM-SC) when the BM-SC acquires that the bearer needs to be changed through generating a bearer change operation, or receiving a Multimedia Multicast Broadcast Service (MBMS) bearer operation request from an SGSN, or processing an activating or deactivating request operation of a multicast bearer from a terminal.

21. The method according to any one of claims 15, 16, 17, 19, and 20, wherein the bearer change control entity is an application server.
